(19) **Europäisches Patentamt**
**European Patent Office**
**Office européen des brevets**

(11) **EP 2 164 899 B1**

(12) **EUROPEAN PATENT SPECIFICATION**

(45) Date of publication and mention
of the grant of the patent:
**25.12.2013 Bulletin 2013/52**

(51) Int Cl.:
***C08L 23/10*** (2006.01)          ***C08L 23/14*** (2006.01)
***C08L 23/16*** (2006.01)

(21) Application number: **08784731.5**

(22) Date of filing: **11.07.2008**

(86) International application number:
**PCT/EP2008/005692**

(87) International publication number:
**WO 2009/007132 (15.01.2009 Gazette 2009/03)**

(54) **HETEROPHASIC POLYOLEFIN COMPOSITION**

HETEROPHASISCHE POLYOLEFIN-ZUSAMMENSETZUNG

COMPOSITION DE POLYOLÉFINE HÉTÉROPHASIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **11.07.2007 EP 07013623**

(43) Date of publication of application:
**24.03.2010 Bulletin 2010/12**

(73) Proprietor: **Borealis Technology OY**
**06101 Porvoo (FI)**

(72) Inventors:
• **MALM, Bo**
**FIN-02110 Espoo (FI)**

• **TUOMINEN, Olli**
**FIN-00930 Helsinki (FI)**

(74) Representative: **Grünecker, Kinkeldey, Stockmair & Schwanhäusser**
**Leopoldstrasse 4**
**80802 München (DE)**

(56) References cited:
**EP-A- 1 681 315          EP-A- 1 788 023**
**EP-B- 1 373 403          WO-A-98/59002**
**WO-A-2006/065649**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a heterophasic polyolefin composition and to a process for producing same.

Description of the prior art

Heterophasic polyolefin compositions are generally employed in applications where soft polymers are desired. Soft heterophasic polypropylene copolymer compositions are usually produced by preparing a polypropylene copolymer matrix and adding thereto an amorphous elastomeric component to achieve lower stiffness.

Such heterophasic propylene polymers are typically chosen for their high impact strength, which makes them especially suitable for applications such as injection molding for thin-wall packaging and food packaging. Other application areas include automotive parts formed by injection molding.

A suitable soft heterophasic material includes an ethylene/propylene copolymer matrix having a relatively high amount of rubber so as to achieve a stiffness of 500 MPa or lower. However, known heterophasic materials with a stiffness of 500 MPa or less suffer from negative effects on the impact resistance. Further, very low stiffness cannot be achieved by only increasing the rubber content. Moreover, said material is prone to fogging, which is disadvantageous in some applications.

Designing tailored polymer compositions can be challenging since many polymer properties are directly or indirectly interrelated. It is, for example, difficult to combine a low stiffness of a polymer composition with a high melting temperature. EP-A-991719 discloses a propylene copolymer having a tensile modulus of 420 MPa or less. However, while said tensile modulus might be desirable, the melting temperature of said material is still undesirably low for some applications.

EP 0 894 102 A2 describes a polyolefin composition comprising a random copolymer and a homopolymer. The random copolymer has a MFR2 of below 0.4 (g/10min) in order to achieve good creep properties. EP 0 785 954 A2 describes olefin copolymers which may comprise a random copolymer component having a very low MFR2, such as 0.005 (g/10min). EP 1270628 A2 discloses a process for producing a propylene random copolymer

WO 2006/065649 and WO 98/59002 both disclose polyolefin compositions, namely heterogeneous or heterophasic polyolefin compositions. Both documents, however, do not disclose compositions wherein a mixture of a propylene homopolymer component and a propylene random copolymer component is present, wherein the random propylene copolymer component has a specific MFR2 value, and the overall MFR2 ratio of these two components satisfies the criteria as outlined in the present invention. Both documents furthermore do not disclose any information concerning the relevance of such an MFR2 ratio nor the advantages associated with a polyolefin component being a mixture of a propylene homopolymer and a propylene random copolymer component.

EP 1373403 discloses heterophasic propylene polymer compositions without identifying that the matrix phase is a blend of a homopolymeric component and a random copolymer component as required in the present invention, i.e. wherein both components have specific MFR2 values leading to a defined MFR2 value ratio. With respect to the propylene copolymer component, this document furthermore reveals a very low comonomer content, furthermore such a propylene copolymer component is, if at all, an optional component only.

EP 1681315 discloses a heterophasic polymer composition wherein the matrix phase may comprise two different fractions. EP 1681315 identifies in this context that the MFR values of these fractions may be similar or different, without, however, identifying the concept of the present invention, namely the presence of a matrix being composed of propylene homopolymer component and a propylene copolymer component with specific MFR2 values and a specific MFR value ratio.

EP 1788023 discloses multimodal polypropylene polymer compositions for which it is disclosed that if a mixture of homopolymers and random copolymers is present in the matrix phase, the MFR2 values of the different fractions of the matrix phase should be similar. Accordingly, also EP 1788023 does not disclose the technical teaching as defined further below and claimed in the present invention.

Object of the present **invention**

Accordingly, it is an object of the present invention to provide a polyolefin composition overcoming the drawbacks of the prior art, and in particular compositions having a low stiffness accompanied by a high melting temperature.

**Brief** description of the present **invention**

The present invention solves the above object by providing a heterophasic polyolefin composition according to claim 1. Preferred embodiments are outlined in the subclaims and also in the following specification. Further the present invention provides processes for preparing the heterophasic polyolefin composition as well as moulded articles comprising the heterophasic polyolefin composition, as outlined in the claims and further explained in the following specification.

The heterophasic polyolefin composition of the present invention exhibits a low stiffness together with a high melting temperature and is therefore particularly suitable for the manufacture of films, molded articles, sheets, bottles, panels, foams, pipes, tubes and other molded articles.

**Detailed description of the invention**

The present invention provides a heterophasic polyolefin composition as defined in claim 1.

Preferably, the MFR2 ratio defined in claim 1 is greater than 5, such as 5.1 or more, such as from 5.1 to 12, with upper limits being suitably 50, 40, 25, 20 or 15.

The expression "propylene random copolymer" as used herein refers to the comonomer in said propylene copolymer being distributed randomly, leading to a statistical insertion within the polymer chain.

The melt flow rate MFR2 of the propylene random copolymer component (B) in the polyolefin composition is preferably from 1 to 14, and in embodiments more preferably from 1 to 2.5, most preferably from 1.2 to 1.7, or in other embodiments from 8 to 14. Such a melt flow rate yields a XS content of component (B) having a high weight average molecular weight (MW), which may be expressed by an IV value of the XS content of component (B) of about 1 dl/g or more. Such a high molecular weight XS content for the component (B) further increases the overall balance of properties for the final composition.

The melt flow rate MFR2 of the propylene homopolymer component (A) is adjusted so that the desired MFR2 ratio is achieved. Suitable examples of MFR2 values for component (A) are at least 80, preferably at least 90, and more preferably at least 100 with suitable upper limits of e.g. 200, 150, 120 or 110, such as from 95 to 120, and in other embodiments also 5 or more with suitable upper limits of 40, 25, 15 or 10, such as from 5 to 10, preferably from 6 to 8.5. The values depend from the MFR2 value for component (B) and are adjusted in order to meet the requirement concerning the MFR2 ratio. Surprisingly it has been determined that the MFR2 ratio as defined in the present invention enables the preparation of compositions with suitably broad molecular weight distributions without having a detrimental effect on extrudability and mouldability.

The propylene random copolymer component (B) comprises repeating units derived from at least one comonomer selected from the group consisting of ethylene and $\alpha$-olefin monomers. Preferably, said $\alpha$-olefin monomers comprise from 4 to 12 carbon atoms. Examples of suitable $\alpha$-olefin monomers include 1-butene, 1-pentene, 4-methyl-1-pentene, 1-hexene, 1-heptene and 1-octene. In a more preferred embodiment, the propylene random copolymer component (B) is derived from propylene and either ethylene or 1-butene. In a particularly preferred embodiment, the propylene random copolymer component (B) is a random propylene-ethylene copolymer.

In another preferred embodiment, the propylene copolymer random component (B) comprises at least two different comonomers. Suitable comonomers are the same as defined above.

In the propylene random copolymer component (B), the amount of the at least one comonomer selected from the group of ethylene and $\alpha$-olefins is preferably from 1 to 20-wt%, preferably from 1 to 15-wt%, such as from 1 to 12-wt%, more preferably from 2 to 10-wt% such as from 4 to 10-wt%, and even more preferably from 5 to 8-wt%, based on the total weight of the random propylene copolymer component (B). It is in particular preferred when the component (B) comprises 5-wt% or more of comonomer, typically 5.5 to 8-wt%. Surprisingly it has been determined that such a comonomer amount results in a high XS content of the component (B) which increases overall performance of the final composition, in particular concerning the desired properties of softness and impact strength.

By adjusting the comonomer content in the propylene random copolymer component (B), it is possible to tailor the stiffness properties (the tensile modulus), and also the impact properties. Generally, a higher comonomer content lowers the stiffness and increases the impact properties.

As indicated above, the composition in accordance with the present invention comprises a propylene homopolymer component (A) which may comprise up to 1-wt% of at least one comonomer selected from the group consisting of ethylene and $\alpha$-olefin monomers, wherein said $\alpha$-olefin monomers comprise from 4 to 12 carbon atoms. Examples of suitable $\alpha$-olefin monomers include 1-butene, 1-pentene, 4-methyl-1-pentene, 1-hexene, 1-heptene and 1-octene. Preferably the comonomer is ethylene.

The component (A) may be a syndiotactic or an isotactic propylene polymer as defined herein, typically component (A) is an isotactic propylene polymer as defined herein, with an isotactic ratio of typically above 0.9, more preferably above 0.95 and in embodiments up to 0.98 or more, such as 0.99 or even 0.995, determined by IR spectroscopy as described in more detail in EP 0 277 514 A2, incorporated herein by reference.

The overall comonomer content for the polyolefin composition comprising component (A) as well as component (B) typically is in the range of from 2.5 to 6-wt% preferably 3 to 5-wt%.

The polyolefin composition advantageously exhibits a low stiffness. Preferably, the flexural modulus is not higher than 600 MPa, more preferred 500 MPa, and even more preferred 450 MPa.

The polyolefin composition has a high melting temperature. Preferably, the melting temperature ($T_M$) of the polyolefin composition is at least 150°C, preferably at least 154°C, and more preferably at least 160°C. The melting temperature as defined herein refers to the main melting peak as determined by DSC measurement.

In the polyolefin composition, the propylene random copolymer component (B) and the propylene homopolymer component (A) are preferably contained in the composition in a weight ratio of from 20:80 to 80:20, and more preferably from 30:70 to 70:30, and in embodiments in a ratio of from 40:60 to 60:40.

In accordance with the present invention, the polymer composition may comprise further additives, such as stabilizers (e.g. antioxidants and process stabilizers) as well as fillers and reinforcing agents, as known to the skilled person. Such additional components for the polymer compositions may be prepared in accordance with the technical teaching of the present invention, and may be employed in amounts suitable for the intended end use application, as is well known to the person skilled in the art. Typical additives are in particular nucleating agents, which may be selected among the known nucleating agents, including alpha- as well as beta-nucleating agents. These are added, if present in conventional amounts in order to further tailor the properties of the composition.

The above listed additives may be compounded with the polymer composition in a usual manner, as is well known to the person skilled in the art.

As defined in claim 1 the present invention provides a heterophasic polyolefin composition, comprising

(a) 65 to 99% by weight of the polyolefin composition as described above as the matrix phase, and
(b) 1 to 35-wt% of a rubber component dispersed in said matrix phase.

The term "heterophasic polyolefin composition" as used herein refers to a copolymer composition comprising a matrix phase and a dispersed phase.

The rubber component of the heterophasic polyolefin composition may be selected among typical rubbers, such as elastomeric polyolefins, styrenics, including SEBS, diene rubbers as well as copolymer rubbers comprising olefin monomers as well as non-conjugated diene monomers, such as EPDM and mixtures thereof. Preferred are copolymer rubbers comprising olefin monomers as well as non-conjugated diene monomers. More preferably, said rubber is selected from the group of copolymer rubbers comprising olefin monomers. Particularly preferred is an ethylene-propylene rubber (EPR). EPR materials may for example be synthesized in a final step of a multi-step process, where the first step is the synthesis of the matrix polymer, as will be outlined in more detail further below. Alternatively, said material may be mechanically blended with the matrix polymer in a separate melt blending step, as is well known to a person skilled in the art. The amount of the rubber component in the heterophasic composition typically is from 8 to 30-wt%, more preferably from 10 to 25-wt% and more preferably from 10 to 20-wt%, based on the total weight of the matrix phase and the dispersed (rubber) phase.

The matrix part of the heterophasic polyolefin composition provides the stiffness properties of the material, while the part of the random copolymer component (B) which is soluble in xylol (in the following referred to as XS fraction) is important for the impact properties and the optical properties of the composition.

Therefore, preferably, the total XS fraction of the propylene random copolymer component (B) is from 3 to 35-wt%, more preferably from 6 to 30-wt%, and even more preferred from 6 to 25-wt%.

The dispersed phase of the heterophasic polyolefin composition further exhibits an intrinsic viscosity (IV) of the AM fraction of 4 dl/g or less, with a preferred lower limit of 1 dl/g. A more preferred range is from 1.4 to 3.5 dl/g. If the IV is less than 1 dl/g, the impact properties are deteriorated. An IV within the desired range improves the optical properties, in particular haze, without sacrificing the impact properties. The present invention accordingly achieves a superior overall balance of properties, including conflicting properties, such as optical and impact properties.

The rubber component used in the heterophasic composition may be a rubber produced in a single stage reaction or it may be a rubber prepared in a reaction involving two or more stages. The rubber components produced in such a multi stage process, preferably two stage process, may be identical or may differ with respect to at least one property, such as comonomer content, AM content, IV of AM content. Such a rubber component may in particular be prepared using a sequence of gas phase reactors for producing the individual rubber components.

Typically, the rubber component or the rubber components have an AM content of 20-wt% or more, preferably 23 to 30-wt%. In the case of an EPR rubber component the ethylene content of the AM part of the rubber component is from 22 to 40, preferably 25 to 35-wt%. For such EPR rubber components the overall ethylene content typically amounts to from 25 to 60-wt%, based on the weight of the EPR component, preferably 30 to 60-wt%.

The heterophasic propylene copolymer may be prepared in any suitable manner known to the skilled person in the art, including mechanical compounding processes as well as sequential polymerization processes, the latter being preferred. Alternatively, the matrix phase may be prepared by suitable sequential polymerization processes, while the dispersed phase may either be introduced by compounding processes or by a further polymerization carried out in the presence of the already polymerized matrix phase.

More specifically, the present invention also provides a process for producing the above polymer composition, the process comprising the steps of:

- polymerizing propylene and optionally the comonomer as defined herein to form the propylene homopolymer component (A); and subsequently
- copolymerizing propylene and the at least one comonomer selected from the group consisting of ethylene and α-olefin monomers in the presence of propylene homopolymer component (A) to form the propylene random component (B).

In a preferred embodiment, the process is carried out in two different reactors, typically the component (A) is produced in a loop reactor (slurry polymerization), while component (B) is prepared in a subsequent gas phase reactor in the presence of component (A).

Preferably, the heterophasic polyolefin composition is a reactor made heterophasic propylene polymer, i.e. a reaction product which is obtained from a polymerization reaction by sequentially polymerizing the different components of the heterophasic polyolefin composition. Any polymerization method, including solution, slurry and bulk polymerization or gas phase polymerization may be used in any desired order. Bulk polymerization defines in the present application a polymerization in a reaction medium comprising at least 60 wt% monomer.

Below, a preferred process for preparing first the matrix phase of the heterophasic polyolefin composition is described in more detail, followed by a description of a process for the preparation of the dispersed phase.

The matrix phase of the heterophasic polyolefin composition may be prepared by polymerizing, in a slurry reactor, for example a loop reactor, propylene monomers, and if desired small amounts of comonomers, in the presence of a polymerization catalyst to produce the propylene homocopolymer component (A). Said component (A) is then transferred to a subsequent gas phase reactor, wherein in the gas phase reactor propylene monomers are reacted in the presence of suitably selected comonomers in order to produce the propylene random copolymer component (B) in the presence of the reaction product of the first step. This reaction sequence provides a reactor blend of components (A) and (B) constituting the matrix phase of the heterophasic polyolefin composition of the present invention.

It is of course possible that the first reaction is carried out in a gas phase reactor while the second polymerization reaction is carried out in a slurry reactor, for example a loop reactor. It is furthermore also possible to reverse the order of producing components (B) and (A), which has been described above in the order of first producing component (A) and then producing component (B).

The above-discussed process, comprising at least two polymerization steps, is advantageous since it provides easily controllable reaction steps, enabling the preparation of a desired reactor blend of the matrix phase of the heterophasic polyolefin composition. The polymerization steps may be adjusted, for example by appropriately selecting monomer feed, comonomer feed, hydrogen feed, temperature and pressure in order to suitably adjust the properties of the polymerization products obtained. For the preferred embodiments of component (B) it is in particular suitable to employ a comonomer/propylene ratio, preferably ethylene/propylene ratio of 30 to 60 mol/kmol during polymerization. Hydrogen feed in particular may be employed, as is known to the skilled person, to adjust the MFR value of a component produced in a given reactor.

Preferably the process comprises further polymerization stages, which again preferably are gas phase polymerisation steps, for producing the rubber component/rubber components in the presence of the matrix phase comprising the reactor made composition of component (A) and (B). During these further polymerization stages the properties of the rubber component may be adjusted in a manner known to the skilled person, such as hydrogen feed, reaction temperature or comonomer ratio. For the preferred embodiments of the rubber components it is in particular preferred to employ a ratio of ethylene/propylene of 400 to 600 mol/kmol during polymerization.

The process may be carried out using any suitable catalyst for the preparation of propylene monomers, including, Ziegler-Natta catalysts as well as single site catalysts (metallocene catalysts), preferably however a Ziegler-Natta catalysts, in particular a high yield Ziegler-Natta catalyst (so-called fourth and fifth generation type to differentiate from low yield, so-called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl based compound. Suitable catalysts are in particular disclosed in US 5,234,879, WO 92/19653, WO 92/19658 and WO 99/33843, incorporated herein by reference.

Other suitable catalysts are particulate catalysts as disclosed in WO 04/029112, incorporated herein by reference, as well as catalysts of this type described in WO 03/000754 and WO 03/000757, also incorporated herein by reference.

Preferred external donors are the known silane-based donors, such as dicyclopentyl dimethoxy silane (DONOR 1 in the examples) or cyclohexyl methyldimethoxy silane.

One specifically preferred embodiment of the process of the present invention is a loop-gas phase process, such as developed by Borealis, known as Borstar® technology, described for example in EP 0887379 A1 and WO 92/12182, incorporated herein by reference.

Such a process can be described as a first loop polymerization stage for producing component (A), followed by a first gas phase reactor for producing component (B) in the presence of component (A). Further subsequent gas phase reactors are provided for preparing the rubber component/rubber components in the presence of the matrix phase comprising (A) and (B).

Generally, the temperature for the reaction is from 40°C to 110°C, preferably between 60°C and 100°C, and in particular between 70°C and 90°C. The pressure is selected to be in the range of from 20 to 80 bar, preferably 30 to 60 bar, with the option of adding hydrogen in order to control the molecular weight. The reaction product of the slurry polymerization, which preferably is carried out in a loop reactor, is then transferred to the subsequent gas phase reactor, wherein the temperature preferably is within the range of from 50°C to 130°C, more preferably 60°C to 100°C, at a pressure in the range of from 5 to 50 bar, preferably 15 to 35 bar, again with the option of adding hydrogen in order to control the molecular weight.

The average residence time can vary in the reactor zones identified above. In embodiments, the average residence time in the slurry reaction, for example the loop reactor, is in the range of from 0.5 to 5 hours, for example 0.5 to 2 hours, while the average residence time in the gas phase reactor generally will be from 1 to 8 hours.

The properties of the matrix phase produced with the above-outlined process may be adjusted and controlled with the process conditions as known to the skilled person, for example by one or more of the following process parameters: temperature, hydrogen feed, comonomer feed, propylene feed, catalyst, type and amount of external donor, but not limited to these parameters.

In accordance with a further preferred embodiment of the present invention as indicated above, the obtained matrix phase is then transferred into a further reactor, preferably a gas phase reactor in order to polymerize a rubber component, preferably an EPR component, as the dispersed phase in the presence of the matrix phase.

This process yields a highly suitable reactor made heterophasic composition as defined herein, combining stiffness values of below 600 MPa (flexural modulus) with improved impact properties (Charpy and falling weight impact) and satisfactory optical properties. An example of such a preferred heterophasic polyolefin composition of the invention is a composition satisfying the following conditions:

Matrix phase:

Component (A): isotactic polypropylene

Component (B): Comonomer content greater than 5-wt%, MFR2 from 0.5, preferably 0.8 to 15 (g/10min) ratio of MFR2 of component (A)/component (B) greater than 5

Dispersed phase:

EPR rubber component, amount 10 to 20-wt% (based on weight of heterophasic composition, AM content of EPR from 23 to 30-wt%, ethylene content of AM 25 to 35-wt% and IV of AM from 1.4 to 3.5 (dl/g)

In the following, definitions and determination methods as used in the above descriptions and the examples will be given.

MFR2 as described in the present invention is determined according to ISO 1133 (230°C, 2.16 kg load)

**The xylene soluble fraction (XS)** as defined and described in the present invention is determined as follows: 2.0 g of polymer are dissolved in 250 mm p-xylene at 135°C under agitation. After 30 minutes, the solution was allowed to cool for 15 minutes at ambient temperature and then allowed to settle for 30 minutes at $25 \pm 0.5$°C. The solution was filtered with filter paper into two 100 mm flask. The solution from the first 100 mm vessel was evaporated in nitrogen flow and the residue dried under vacuum at 90°C until constant weight is reached. Xylene soluble fraction (percent) can then be determined as follows:

$$XS\% = (100 \times m_1 \times v_0)/(m_0 \times v_1),$$

wherein $m_0$ designates the initial polymer amount (grams), $m_1$ defines the weight of residue (grams), $v_0$ defines the initial volume (milliliter) and $v_1$ defines the volume of analyzed sample (milliliter).

The solution from the second 100 ml flask was treated with 200 ml of acetone under vigorous stirring. The precipitate was filtered and dried in a vacuum oven at 90°C. This solution can be employed in order to determine the amorphous part of the polymer (AM) using the following equation:

$$AM\% = (100 \times m_1 \times v_0)/(m_0 \times v_1)$$

wherein $m_0$ designates the initial polymer amount (grams), $m_1$ defines the weight of residue (grams), $v_0$ defines the initial volume (milliliter) and $v_1$ defines the volume of analyzed sample (milliliter).

**The intrinsic viscosity (IV)** value is increasing with the molecular weight of a polymer. IV of AM: measured according to ISO 1628.

**Comonomer content** (weight percent) is determined in a known manner based on FTIR, calibrated with C13NMR.

**The melting temperature ($T_M$) and the crystallisation temperature ($T_{CR}$)** are measured with a Mettler TA820 differential scanning colorimetry device (DSC) on $3 \pm 0.5$ mg samples. Melting temperatures and crystallisation temperatures are obtained during 10°C/min cooling and heating scans between 30°C and 225°C. Melting temperatures and crystallisation temperatures were taken as the peaks of endotherms and exotherms.

**Charpy notched impact** is measured according to ISO 179 (room temperature, if not otherwise mentioned) and at -20°C using injection molded test specimen as described in EN ISO 1873-2 (80 x 10 x 4 mm).

**Tensile strength** is measured according to ISO 572-2 (cross head speed 50 mm/min).

**Tensile modulus** is measured according to ISO 572-2 (cross head speed 1 mm/min)

**Flexural modulus** is measured according to ISO 178, using injection molded test specimens as described in EN ISO 1873-2 (80 x 10 x 4 mm).

**Instrumented falling weight impact** is measured according to ISO 6603-2 with 2 mm thick injection molded plaques

## Examples

All heterophasic compositions were obtained with the above-described process. The polymerization parameters and results are summarized below.

The compositions of the Examples 1 and 2 (E1, E2) and Comparative Examples 1 and 2 (CE1, CE2) were produced with a process as outlined above. In the Examples in accordance with the present invention, the matrix composition had an overall MFR2 of 33 and 32, respectively. The propylene homopolymer component (A) had a MFR2 of 100 and 115, respectively. The MFR2 of the propylene random copolymer component (B) was only about 8.

By contrast, while the matrix composition of the comparative examples had a MFR2 of 39 and 31, respectively, the propylene homopolymer component (A) however had a MFR2 of 32 and 31, respectively.

As may be seen from Table 1, the heterophasic compositions of the present invention have a much better stiffness/impact balance, as indicated by the Charpy values. Thus, when the propylene random copolymer component (B) has an MFR2 of not more than 10, and the propylene homopolymer component (A) has an MFR of at least 80, resulting in a MFR2 ratio (A)/(B) of above 5, superior stiffness/impact properties are obtained, as compared to heterophasic compositions wherein the MFR2 of both components is very similar to each other and thus similar to the overall MFR2 of the composition. Other properties, such as melting temperature and tensile properties are not affected.

With the present invention, soft heterophasic polyolefin compositions are provided having superior stiffness/impact properties while having a high melting temperature. Such compositions are especially suitable for the manufacture of films, molded articles, sheets, bottles, panels, foams, pipes and tubes.

An additional example (E3) and comparative example (CE3) were prepared and evaluated as indicated in Table 1. The results conform the superiority of the compositions in accordance with the present invention.

**Table 1**

| | CE1 | CE2 | E1 | E2 | | CE3 | E3 |
|---|---|---|---|---|---|---|---|
| Catalyst type | Commercial catalyst POLYTRAK™ by W.R.Grace & Co. (described in general in EP491566A2 / EP591224B1 / EP586390B1) | -> | -> | -> | | As described for examples 8 and 9 in WO04/029112 | -> |
| Donor type | DONOR 1 | -> | -> | -> | | DONOR 1 | |
| Al/Ti ratio (mol/mol) | 200 | 200 | 370 | 370 | | 220 | 180 |
| Al/donor ratio (mol/mol) | 10 | 10 | 5 | 5 | | 10 | 10 |
| Prepol Temperature (°C) | 30 | -> | -> | -> | | 30 | |
| **Loop** | | | | | | | |
| **Temperature (°C)** | **85** | -> | -> | -> | | **70** | **70** |
| Pressure (kPa) | 5400-5500 | -> | -> | -> | | -> | -> |
| H2/C3 ratio (mol/kmol) | 12 | 12 | 30 | 31 | | 2,3 | 1,6 |
| C2/C3 ratio (mol/kmol) | 0 | 0 | 0 | 0 | | 3,3 | 1 |
| Split % | 50 | 50 | 45 | 50 | | 43 | 40 |
| **MFR2 (g/10 min)** | **39** | **31** | **100** | **115** | | **6,5** | **7,6** |
| *Ethene content (%)* | *0* | *0* | *0* | *0* | | ***2,8*** | ***1,0*** |
| XS (%) | 1,9 | 1,7 | 1,8 | 1,2 | | 6,9 | 4,9 |
| **GPR1** | | | | | | | |
| **Temperature (°C)** | **85** | **85** | **80** | **80** | | **80** | **80** |
| Pressure (kPa) | 3300 | -> | -> | -> | | -> | -> |
| H2/C3 ratio (mol/kmol) | 160 | 160 | 120 | 125 | | 7 | 6 |
| C2/C3 ratio (mol/kmol) | 50 | 50 | 50 | 50 | | 32 | 45 |
| Split % | 50 | 50 | 55 | 50 | | 57 | 60 |
| **MFR2 (g/10 min)** | **31,5** | **31,1** | **33,0** | **31,9** | | **3,5** | **2,8** |
| **XS (%)** | **12,3** | **10,5** | **12,0** | **10,1** | | **8,7** | **15,4** |

(continued)

| | CE1 | CE2 | E1 | E2 | | CE3 | E3 |
|---|---|---|---|---|---|---|---|
| **Matrix ethene content (wt%)** | **4,0** | **3,9** | **3,7** | **3,7** | | **4,0** | **4,2** |
| **GPR2** | | | | | | | |
| **Temperature (°C)** | **80** | **80** | **80** | **85** | | **80** | **70** |
| Pressure (kPa) | 3000 | -> | -> | -> | | -> | -> |
| C2/C3 ratio (mol/kmol) | 500 | 500 | 500 | 500 | | 480 | 460 |
| H2/C2 ratio (mol/kmol) | 40 | 40 | 40 | 40 | | 470 | 450 |
| | | | | | | | |
| MFR2 (g/10 min) | 15 | 12 | 10 | 9,7 | | 3,4 | 2,9 |
| **XS (%)** | **25,5** | **30,5** | **27,3** | **31,0** | | **26,5** | **27,5** |
| AM (%) | 24,1 | 29 | 25,3 | 29 | | 25 | 26 |
| ethene of AM (%) | 33 | 35,8 | 31,8 | 32 6 | | 24,3 | |
| **IV; viscosity of AM (dl/g)** | **2,4** | **2,5** | **2,9** | **2,8** | | **1,5** | **1,5** |
| **Total ethene content (%)** | 10,5 | 11,3 | 10,1 | 13,3 | | 10,1 | 10 |
| **Pellet MFR2 (g/10 min)** | **15** | **12** | **16** | **9,4** | | **4,1** | **3,5** |
| | | | | | | | |
| **MFR2 (g/10 min)** | **15** | **12** | **16** | **9,4** | | **4,1** | **3,5** |
| | | | | | | | |
| **Matrix XS (w%)** | **12,3** | **10,5** | **12,0** | **10,1** | | **8,7** | **15,4** |
| Matrix ethylene (w%) | 4,0 | 3,9 | 3,7 | 3,7 | 4,0 | 4,2 |
| ***Matrix MFR (loop)/MFR (GPR1)*** | *1,4* | *1,0* | *7,1* | *11,5* | *3,0* | *5,1* |
| Total ethylene (w%) | 10,5 | 11,3 | 10,1 | 13,3 | | 10,1 | 10 |
| **Total XS (w%)** | 25,5 | 30,5 | 27,3 | 31 | | 26,5 | 27,5 |
| *viscosity of AM (dl/g)* | *2,4* | 2,5 | *2,9* | 2,8 | | 1,5 | 1,5 |
| | | | | | | | |
| Tm (°C) | 164,8 | 164,7 | 164,7 | 164,8 | | 138,8 | 154 |
| Tcr (°C) | 117,8 | 117,3 | 118,7 | 119,5 | | 97,3 | 103 |
| | | | | | | | |

(continued)

|  | CE1 |  | CE2 |  | E1 | E2 |  | CE3 | E3 |
|---|---|---|---|---|---|---|---|---|---|
| **Tensile stress at yield (MPa)** | 17,1 |  | 15,5 |  | 16,8 | 15,2 |  | 15,7 | 15,8 |
| Tensile strain at yield (%) | 13,2 |  | 13,4 |  | 12,2 | 12,8 |  | 15,5 | 16,7 |
| Elongation of break (%) | 680 |  | 670 |  | 660 | 640 |  | 510 | 490 |
|  |  |  |  |  |  |  |  |  |  |
| *Tensile modulus (Mpa)* | *560* |  | *500* |  | *570* | *490* |  | *500* | *480* |
| **Flexural modulus (MPa)** | **515** |  | **450** |  | **530** | **470** |  | **440** | **420** |
|  |  |  |  |  |  |  |  |  |  |
| Charpy, notched, RT (kJ/m2) | 14,4 |  | 42,7 |  | 17,3 | 71,7 |  | 39 | 48,3 |
| Charpy, notched, 0 C (kJ/m2) |  |  |  |  |  |  |  | 9,5 | 10,4 |
| Charpy, notched, -20 C (kJ/m2) | 3,8 |  | 5,2 |  | 5 | 7,1 |  | 1,9 | 2 |
| Charpy, notched, -40 C (kJ/m2) | 2 |  | 3,1 |  | 3 | 3,9 |  |  |  |
| Instrumented falling weight impact |  |  |  |  |  |  |  |  |  |
| -20 C |  |  |  |  |  |  |  |  |  |
| Total energy, Etot (J) | 24 |  | 32 |  | 31 | **31** |  | 32 | 32 |
| type/failure | d/br |  | ductile |  | duct-d/br | duct-d/br |  | duct-d/br | ductile |
|  |  |  |  |  |  |  |  |  |  |
| CaSt (ppm) | 1000 |  | 500 |  | 500 | 500 |  |  |  |
| Irganox B225 (ppm) | 3000 |  | 1500 |  | 1500 | 1500 |  | 1000 | 1000 |
| SHT (synthetic hydrotalcite) (ppm) |  |  |  |  |  |  |  | 400 | 400 |

**Claims**

1. A heterophasic polyolefin composition comprising

   (i) 65 to 99-wt% of a polyolefin composition as the matrix phase, and
   (ii) 1 to 35-wt% of a rubber component dispersed in the matrix phase,
   wherein the polyolefin composition comprises:

      (a) propylene homopolymer component (A), and

(b) a propylene random copolymer component (B) comprising repeating units derived from at least one comonomer selected from the group consisting of ethylene and $\alpha$-olefin monomers,

wherein the random propylene copolymer component (B) has an MFR2 of from 0.5 to 15, wherein the melt flow rate MFR2 of the propylene homopolymer component (A) is at least 5, wherein the propylene homopolymer component (A) may comprise up to 1 wt% of at least one comonomer selected from the group consisting of ethylene and $\alpha$-olefin monomers, wherein the MFR2 ratio of component (A)/component (B) is equal to or greater than 5, wherein the MFR2 is determined according to ISO1133.

2. The heterophasic polyolefin composition of claim 1, wherein the melt flow rate MFR2 of the propylene random copolymer component (B) is from 0.8 to 10, wherein the MFR2 is determined according to ISO1133.

3. The heterophasic polyolefin composition of claim 1, or 2, wherein the melt flow rate MFR2 of the propylene homopolymer component (A) is at least 80, wherein the MFR2 is determined according to ISO1133.

4. The heterophasic polyolefin composition of any of claims 1 to 3, wherein the polyolefin composition has a melting temperature ($T_M$) of at least 150°C, wherein the melting temperature is the main melting peak in a DSC measurement.

5. The heterophasic polyolefin composition of any of claims 1 to 4, wherein the polyolefin composition has a flexural modulus of not higher than 600 MPa, wherein the flexural modulus is measured according to ISO178, using injection molded test specimens as described in EN ISO1873-2.

6. The heterophasic polyolefin composition of any of claims 1 to 5, wherein the $\alpha$-olefin comprises from 4 to 12 carbon atoms.

7. The heterophasic polyolefin composition of any of claims 1 to 6, wherein the at least one comonomer is selected from the group consisting of ethylene, 1-butene, 1-pentene, 4-methyl-1-pentene, 1-hexene, 1-heptene and 1-octene.

8. The heterophasic polyolefin composition of any of claims 1 to 7, wherein the propylene random copolymer component (B) is derived from propylene and ethylene or 1-butene.

9. The heterophasic polyolefin composition of any of claims 1 to 8, wherein the propylene random copolymer component (B) is a propylene/ethylene copolymer.

10. The heterophasic polyolefin composition of any of claims 1 to 9, wherein the amount of the at least one comonomer selected from the group of ethylene and $\alpha$-olefins in the propylene random copolymer component (B) is from 1 to 12-wt%, based on the total weight of the random propylene copolymer component (B).

11. The heterophasic polyolefin composition of any of claims 1 to 10, wherein the amount of the at least one comonomer selected from the group of ethylene and $\alpha$-olefins in the component (B) is from 3 to 10-wt%, based on the total weight of the propylene random copolymer component (B).

12. The heterophasic polyolefin composition of any of claims 1 to 11, wherein the comonomer for the component (A) is ethylene.

13. The heterophasic polyolefin composition of any of claims 1 to 12, wherein the xylene soluble fraction (XS) of the propylene random copolymer component (B) is from 3 to 35-wt%.

14. The heterophasic polyolefin composition of any of claims 1 to 13, wherein the propylene random copolymer component (B) and the propylene homopolymer component (A) are contained in the composition in a weight ratio of from 20:80 to 80:20.

15. The heterophasic polyolefin composition of any of claims 1 to 14, wherein the rubber component is an ethylene-propylene rubber (EPR).

16. The heterophasic polyolefin composition of any of claims 1 to 15, wherein the rubber component has a xylene soluble fraction (XS) of above 12-wt%.

**17.** A process for producing the heterophasic polyolefin composition of any of claims 1 to 16, comprising the step of compounding a polyolefin composition with a rubber component, wherein the polyolefin composition comprises:

(a) propylene homopolymer component (A), and
(b) a propylene random copolymer component (B) comprising repeating units derived from at least one comonomer selected from the group consisting of ethylene and $\alpha$-olefin monomers,

wherein the random propylene copolymer component (B) has an MFR2 of from 0.5 to 15, wherein the melt flow rate MFR2 of the propylene homopolymer component (A) is at least 5, wherein the propylene homopolymer component (A) may comprise up to 1-wt% of at least one comonomer selected from the group consisting of ethylene and $\alpha$-olefin monomers, wherein the MFR2 ratio of component (A)/component (B) is equal to or greater than 5, wherein the MFR2 is determined according to ISO1133, or
comprising the steps of compounding component (A) with component (B) followed by compounding the obtained mixture with the rubber component, or the step of polymerizing the rubber component in the presence of the polyolefin composition.

**18.** The process of claim 17, wherein the polyolefin composition is produced by a process comprising the steps of:

- polymerizing propylene to form the propylene homopolymer component (A); and subsequently
- copolymerizing propylene and at least one comonomer selected from the group consisting of ethylene and $\alpha$-olefin monomers in the presence of the propylene homopolymer component (A) to form the propylene random component (B).

**19.** The process of claim 18, wherein the polymerization of the propylene homopolymer component (A) and the copolymerization of the propylene random copolymer component (B) is carried out in two different reactors.

**20.** A molded article comprising the heterophasic polyolefin composition of any of claims 1 to 16.

**Patentansprüche**

**1.** Heterophasische Polyolefin-Zusammensetzung umfassend

(i) 65-99 Gew.-% einer Polyolefin-Zusammensetzung als die Matrixphase, und
(ii) 1 bis 35-Gew.-% einer Kautschuk-Komponente, die in der Matrixphase dispergiert ist,
wobei die Polyolefin-Zusammensetzung umfasst:

(a) Propylen-Homopolymer-Komponente (A), und
(b) eine Propylen-Random-Copolymer-Komponente (B) umfassend Wiederholungseinheiten, die von wenigstens einem Comonomer abgeleitet sind, das ausgewählt ist aus der Gruppe bestehend aus Ethylen- und $\alpha$-Olefin-Monomeren,

wobei die Random-Propylen-Copolymer-Komponente (B) eine MFR2 von 0,5 bis 15 aufweist, wobei die Schmelzflußrate MFR2 der Propylen-Homopolymer-Komponente (A) wenigstens 5 beträgt, wobei die Propylen-Homopolymer-Komponente (A) bis zu 1 Gew.-% von wenigstens einem Comonomer, ausgewählt aus der Gruppe bestehend aus Ethylen- und $\alpha$-Olefin-Monomeren,umfassen kann, wobei das MFR2-Verhältnis von Komponente (A)/Komponente (B) gleich oder größer als 5 ist, wobei die MFR2 gemäß ISO1133 bestimmt wird.

**2.** Heterophasische Polyolefin-Zusammensetzung nach Anspruch 1, wobei die Schmelzflußrate MFR2 der Propylen-Random-Copolymer-Komponente (B) 0,8 bis 10 beträgt, wobei die MFR2 gemäß ISO1133 bestimmt wird.

**3.** Heterophasische Polyolefin-Zusammensetzung nach Anspruch 1 oder 2, wobei die Schmelzflußrate MFR2 der Propylen-Homopolymer-Komponente (A) wenigstens 80 beträgt, wobei die MFR2 gemäß ISO1133 bestimmt wird.

**4.** Heterophasische Polyolefin-Zusammensetzung nach einem der Ansprüche 1 bis 3, wobei die Polyolefin-Zusammensetzung eine Schmelztemperatur ($T_M$) von wenigstens 150°C aufweist, wobei die Schmelztemperatur der Hauptschmelzpeak in einer DSC-Messung ist.

5. Heterophasische Polyolefin-Zusammensetzung nach einem der Ansprüche 1 bis 4, wobei die Polyolefin-Zusammensetzung einen Biegemodul von nicht höher als 600 MPa aufweist, wobei der Biegemodul gemäß ISO178 gemessen wird, wobei spritzgegossene Testprobekörper, wie in EN ISO1873-2 beschrieben, verwendet werden.

6. Heterophasische Polyolefin-Zusammensetzung nach einem der Ansprüche 1 bis 5, wobei das $\alpha$-Olefin 4 bis 12 Kohlenstoffatome umfasst.

7. Heterophasische Polyolefin-Zusammensetzung nach einem der Ansprüche 1 bis 6, wobei das wenigstens eine Comonomer ausgewählt ist aus der Gruppe bestehend aus Ethylen, 1-Buten, 1-Penten, 4-Methyl-1-Penten, 1-Hexen, 1-Hepten und 1-Octen.

8. Heterophasische Polyolefin-Zusammensetzung nach einem der Ansprüche 1 bis 7, wobei die Propylen-Random-Copolymer-Komponente (B) von Propylen und Ethylen oder 1-Buten abgeleitet ist.

9. Heterophasische Polyolefin-Zusammensetzung nach einem der Ansprüche 1 bis 8, wobei die Propylen-Random-Copolymer-Komponente (B) ein Propylen/Ethylen-Copolymer ist.

10. Heterophasische Polyolefin-Zusammensetzung nach einem der Ansprüche 1 bis 9, wobei die Menge des wenigstens einen Comonomers, ausgewählt aus der Gruppe von Ethylen und $\alpha$-Olefinen, in der Propylen-Random-Copolymer-Komponente (B) 1 bis 12 Gew.-%, bezogen auf das Gesamtgewicht der Random-Propylen-Copolymer-Komponente (B), beträgt.

11. Heterophasische Polyolefin-Zusammensetzung nach einem der Ansprüche 1 bis 10, wobei die Menge des wenigstens einen Comonomers, ausgewählt aus der Gruppe von Ethylen und $\alpha$-Olefinen, in der Komponente (B) 3 bis 10 Gew.-%, bezogen auf das Gesamtgewicht der Propylen-Random-Copolymer-Komponente (B), beträgt.

12. Heterophasische Polyolefin-Zusammensetzung nach einem der Ansprüche 1 bis 11, wobei das Comonomer für die Komponente (A) Ethylen ist.

13. Heterophasische Polyolefin-Zusammensetzung nach einem der Ansprüche 1 bis 12, wobei die in Xylol lösliche Fraktion (XS) der Propylen-Random-Copolymer-Komponente (B) 3 bis 35 Gew.-% beträgt.

14. Heterophasische Polyolefin-Zusammensetzung nach einem der Ansprüche 1 bis 13, wobei die Propylen-Random-Copolymer-Komponente (B) und die Propylen-Homopolymer-Komponente (A) in der Zusammensetzung in einem Gewichtsverhältnis von 20:80 bis 80:20 enthalten sind.

15. Heterophasische Polyolefin-Zusammensetzung nach einem der Ansprüche 1 bis 14, wobei die Kautschuk-Komponente ein Ethylen-Propylen-Kautschuk (EPR) ist.

16. Heterophasische Polyolefin-Zusammensetzung nach einem der Ansprüche 1 bis 15, wobei die Kautschuk-Komponente eine in Xylol lösliche Fraktion (XS) von mehr als 12 Gew.-% aufweist.

17. Verfahren zum Herstellen der heterophasischen Polyolefin-Zusammensetzung nach einem der Ansprüche 1 bis 16, umfassend den Schritt des Compoundierens einer Polyolefin-Zusammensetzung mit einer Kautschuk-Komponente, wobei die Polyolefin-Zusammensetzung umfasst:

    (a) Propylen-Homopolymer-Komponente (A), und
    (b) eine Propylen-Random-Copolymer-Komponente (B) umfassend Wiederholungseinheiten, die von wenigstens einem Comonomer, ausgewählt aus der Gruppe bestehend aus Ethylen- und $\alpha$-Olefin-Monomeren, abgeleitet sind,

    wobei die Random-Propylen-Copolymer-Komponente (B) eine MFR2 von 0,5 bis 15 aufweist, wobei die Schmelzflußrate MFR2 der Propylen-Homopolymer-Komponente (A) wenigstens 5 beträgt, wobei die Propylen-Homopolymer-Komponente (A) bis zu 1 Gew.-% von wenigstens einem Comonomer, ausgewählt aus der Gruppe bestehend aus Ethylen- und $\alpha$-Olefin-Monomeren, umfassen kann, wobei das MFR2-Verhältnis von Komponente (A)/Komponente (B) gleich oder größer als 5 ist, wobei die MFR2 gemäß ISO1133 bestimmt wird, oder umfassend die Schritte des Compoundierens von Komponente (A) mit Komponente (B) gefolgt vom Compoundieren der erhaltenen Mischung mit der Kautschuk-Komponente, oder den Schritt des Polymerisierens der Kautschuk-Komponente in Gegenwart der Polyolefin-Zusammensetzung.

**18.** Verfahren nach Anspruch 17, wobei die Polyolefin-Zusammensetzung durch ein Verfahren hergestellt wird, das die Schritte umfasst:

- Polymerisieren von Propylen, um die Propylen-Homopolymer-Komponente (A) zu bilden; und anschließend
- Copolymerisieren von Propylen und wenigstens einem Comonomer ausgewählt aus der Gruppe bestehend aus Ethylen- und $\alpha$-Olefin-Monomeren in Gegenwart der Propylen-Homopolymer-Komponente (A), um die Propylen-Random-Komponente (B) zu bilden.

**19.** Verfahren nach Anspruch 18, wobei die Polymerisation der Propylen-Homopolymer-Komponente (A) und die Copolymerisation der Propylen-Random-Copolymer-Komponente (B) in zwei verschiedenen Reaktoren durchgeführt wird.

**20.** Formartikel umfassend die heterophasische Polyolefin-Zusammensetzung nach einem der Ansprüche 1 bis 16.

**Revendications**

**1.** Composition de polyoléfine hétérophasique comprenant

(i) 65 à 99 % en poids d'une composition polyoléfine comme phase matricielle, et
(ii) 1 à 35 % en poids d'un composant caoutchouc dispersé dans la phase matricielle,
dans laquelle la composition polyoléfine comprend :

(a) un composant homopolymère propylène (A), et
(b) un composant copolymère aléatoire propylène (B) comprenant des unités de répétition dérivées d'au moins un comonomère sélectionné parmi le groupe consistant en monomères d'éthylène et d'alpha-oléfine,

dans laquelle le composant copolymère propylène aléatoire (B) possède un MFR2 compris entre 0,5 et 15, dans laquelle l'indice de fluidité à chaud MFR2 du composant homopolymère propylène (A) est d'au moins 5, dans laquelle le composant homopolymère propylène (A) peut comprendre jusqu'à 1 % en poids d'au moins un comonomère sélectionné parmi le groupe consistant en monomères d'éthylène et d'alpha-oléfine, dans laquelle le rapport MFR2 entre le composant (A) et le composant (B) est supérieur ou égal à 5, dans laquelle le MFR2 est déterminé selon la norme ISO1133.

**2.** Composition de polyoléfine hétérophasique selon la revendication 1, dans laquelle l'indice de fluidité à chaud MFR2 du composant copolymère aléatoire propylène (B) est compris entre 0,8 et 10, dans laquelle le MFR2 est déterminé selon la norme ISO1133.

**3.** Composition de polyoléfine hétérophasique selon la revendication 1 ou 2, dans laquelle l'indice de fluidité à chaud MFR2 du composant homopolymère propylène (A) est d'au moins 80, dans laquelle le MFR2 est déterminé selon la norme ISO1133.

**4.** Composition de polyoléfine hétérophasique selon l'une quelconque des revendications 1 à 3, dans laquelle la composition polyoléfine possède une température de fusion ($T_M$) d'au moins 150°C, dans laquelle la température de fusion est le pic de fusion principal dans une mesure DSC.

**5.** Composition de polyoléfine hétérophasique selon l'une quelconque des revendications 1 à 4, dans laquelle la composition polyoléfine possède un module de flexion ne dépassant pas 600 MPa, dans laquelle le module de flexion se mesure selon la norme ISO178, à l'aide de spécimens de test moulés par injection tels que décrits dans la norme EN ISO1873-2.

**6.** Composition de polyoléfine hétérophasique selon l'une quelconque des revendications 1 à 5, dans laquelle l'alpha-oléfine comprend de 4 à 12 atomes de carbone.

**7.** Composition de polyoléfine hétérophasique selon l'une quelconque des revendications 1 à 6, dans laquelle ledit au moins un comonomère est sélectionné parmi le groupe consistant en éthylène, 1-butène, 1-pentène, 4-méthyl-1-pentène, 1-hexène, 1-heptène et 1-octène.

8. Composition de polyoléfine hétérophasique selon l'une quelconque des revendications 1 à 7, dans laquelle le composant copolymère aléatoire propylène (B) est dérivé du propylène et de l'éthylène ou du 1-butène.

9. Composition de polyoléfine hétérophasique selon l'une quelconque des revendications 1 à 8, dans laquelle le composant copolymère aléatoire propylène (B) est un copolymère propylène/éthylène.

10. Composition de polyoléfine hétérophasique selon l'une quelconque des revendications 1 à 9, dans laquelle la quantité dudit au moins un comonomère sélectionné parmi le groupe consistant en éthylène et alpha-oléfines dans le composant copolymère aléatoire propylène (B) est comprise entre 1 et 12 % en poids, sur la base du poids total du composant copolymère propylène aléatoire (B).

11. Composition de polyoléfine hétérophasique selon l'une quelconque des revendications 1 à 10, dans laquelle la quantité dudit au moins un comonomère sélectionné parmi le groupe consistant en éthylène et alpha-oléfines dans le composant (B) est comprise entre 3 et 10 % en poids, sur la base du poids total du composant copolymère aléatoire propylène (B).

12. Composition de polyoléfine hétérophasique selon l'une quelconque des revendications 1 à 11, dans laquelle le comonomère pour le composant (A) est l'éthylène.

13. Composition de polyoléfine hétérophasique selon l'une quelconque des revendications 1 à 12, dans laquelle la fraction soluble de xylène (XS) du composant copolymère aléatoire propylène (B) est comprise entre 3 et 35 % en poids.

14. Composition de polyoléfine hétérophasique selon l'une quelconque des revendications 1 à 13, dans laquelle le composant copolymère aléatoire propylène (B) et le composant homopolymère propylène (A) sont contenus dans la composition dans un rapport pondéral compris entre 20:80 et 80:20.

15. Composition de polyoléfine hétérophasique selon l'une quelconque des revendications 1 à 14, dans laquelle le composant caoutchouc est un caoutchouc éthylène-propylène (EPR).

16. Composition de polyoléfine hétérophasique selon l'une quelconque des revendications 1 à 15, dans laquelle le composant caoutchouc possède une fraction soluble de xylène (XS) supérieure à 12 % en poids.

17. Procédé de fabrication de la composition de polyoléfine hétérophasique selon l'une quelconque des revendications 1 à 16, comprenant la phase consistant à élaborer une composition polyoléfine avec un composant caoutchouc, dans laquelle la composition polyoléfine comprend :

    (a) un composant homopolymère propylène (A), et
    (b) un composant copolymère aléatoire propylène (B) comprenant des unités de répétition dérivées d'au moins un comonomère sélectionné parmi le groupe consistant en monomères d'éthylène et d'alpha-oléfine,

dans laquelle le composant copolymère propylène aléatoire (B) possède un MFR2 compris entre 0,5 et 15, dans laquelle l'indice de fluidité à chaud MFR2 du composant homopolymère propylène (A) est d'au moins 5, dans laquelle le composant homopolymère propylène (A) peut comprendre jusqu'à 1 % en poids d'au moins un comonomère sélectionné parmi le groupe consistant en monomères d'éthylène et d'alpha-oléfine, dans laquelle le rapport MFR2 entre le composant (A) et le composant (B) est supérieur ou égal à 5, dans laquelle le MFR2 est déterminé selon la norme ISO1133, ou bien
comprenant la phase consistant à composer le composant (A) avec le composant (B) avant de composer le mélange obtenu avec le composant caoutchouc, ou la phase de polymérisation du composant caoutchouc en présence de la composition polyoléfine.

18. Procédé selon la revendication 17, dans laquelle la composition polyoléfine s'obtient par un procédé comprenant les phases de:

    - polymérisation du propylène pour constituer le composant homopolymère propylène (A); et ensuite
    - copolymérisation du propylène et d'au moins un comonomère sélectionné parmi le groupe consistant en monomères d'éthylène et d'alpha-oléfine en présence du composant homopolymère propylène (A) pour constituer le composant aléatoire propylène (B).

19. Procédé selon la revendication 18, dans lequel la polymérisation du composant homopolymère propylène (A) et la copolymérisation du composant copolymère aléatoire propylène (B) s'effectuent dans deux réacteurs diffèrents.

20. Article moulé comprenant la composition de polyoléfine hétérophasique selon l'une quelconque des revendications 1 à 16.

## REFERENCES CITED IN THE DESCRIPTION

**Patent documents cited in the description**

- EP 991719 A
- EP 0894102 A2
- EP 0785954 A2
- EP 1270628 A2
- WO 2006065649 A
- WO 9859002 A
- EP 1373403 A
- EP 1681315 A
- EP 1788023 A
- EP 0277514 A2
- US 5234879 A

- WO 9219653 A
- WO 9219658 A
- WO 9933843 A
- WO 04029112 A
- WO 03000754 A
- WO 03000757 A
- EP 0887379 A1
- WO 9212182 A
- EP 491566 A2
- EP 591224 B1
- EP 586390 B1